# EUROPEAN PATENT APPLICATION

(11) **EP 1 462 371 A1**
(43) Date of publication of application: **29.09.2004**
(21) Application number: 03007129.4
(22) Date of filing: 28.03.2003
(51) Int. Cl.: B65B 61/18, B65B 59/00, B65G 17/00

(54) **Unit for applying opening devices to sealed packages of pourable food products**

(71) Applicant: Tetra Laval Holdings & Finance S.A., 1009 Pully (CH)
(72) Inventor: Cavilli, Gianfranco, 41057 San Vito (IT); Raimondi, Federico, 41100 Modena (IT); Sereni, Andrea, 41100 Modena (IT); Baldini, Claudio, 41015 Le Casette (IT); Zuccotti, Alessandro, 15069 Serravalle Scrivia (IT)
(74) Representative: Franzolin, Luigi

(57) **Abstract**

There is described a unit (1) for applying opening devices (2) to pour portions (10) of respective sealed packages (3) of pourable food products. The unit (1) has first conveying means (15) for feeding the packages (3) successively on a horizontal conveying surface (16) along a straight first path (A); second conveying means (17) for feeding the opening devices (2) successively along a curved second path (C) into a predetermined application position (P) with respect to the conveying surface (16); first adjusting means (75) for adjusting the position of the first and second conveying means (15, 17) in a vertical first direction (Z) perpendicular to the conveying surface (16), so as to adjust the height between the application position (P) and the conveying surface (16); and second adjusting means (60, 61, 70) for adjusting the position of the first conveying means (15) along a surface parallel to the conveying surface (16), so as to align the pour portion (10) of each package (3) with the application position (P) in a second and a third direction (Y, X) perpendicular to each other and to the first direction (Z).

## Description

The present invention relates to a unit for applying opening devices to sealed packages of pourable food products.

As is known, many pourable food products, such as fruit juice, UHT (ultra-high-temperature-treated) milk, wine, tomato sauce, etc., are sold in packages made of sterilized packaging material.

A typical example of this type of package is the parallelepiped-shaped package for liquid or pourable food products known as Tetra Brik Aseptic (registered trademark), which is made by folding and sealing a web of laminated packaging material. The packaging material has a multilayer structure comprising a layer of fibrous material, e.g. paper, covered on both sides with layers of heat-seal plastic material, e.g. polyethylene, and, in the case of aseptic packages for long-storage products, such as UHT milk, also comprises a layer of oxygen-barrier material, defined, for example, by aluminium foil, which is superimposed on a layer of heat-seal plastic material, and is in turn covered with another layer of heat-seal plastic material eventually defining the inner face of the package contacting the food product.

As is known, such packages are produced on fully automatic packaging machines, on which a continuous tube is formed from the web-fed packaging material; the web of packaging material is sterilized on the packaging machine itself, e.g. by applying a chemical sterilizing agent, such as a hydrogen peroxide solution, which, once sterilization is completed, is removed, e.g. vapourized by heating, from the surfaces of the packaging material; and the web of packaging material so sterilized is kept in a closed, sterile environment, and is folded and sealed longitudinally to form a vertical tube.

The tube is filled with the sterilized or sterile-processed food product, and is sealed and cut along equally spaced transverse sections to form pillow packs, which are then folded mechanically to form the finished, e.g. substantially parallelepiped-shaped, packages.

Alternatively, the packaging material may be cut into blanks, which are folded on forming spindles into packages, which are then filled with the food product and sealed. One example of the this type of package is the so-called "gable-top" package known by the trade name Tetra Rex (registered trademark).

Once formed, packages of the above type may undergo further operations, such as application of a closable opening device.

The most commonly marketed opening devices comprise a frame portion defining a pour opening and fitted about an opening or pour portion on the top wall of the package, e.g. a through opening or a tearable, pierceable or removable portion; and a cap hinged or screwed to the frame portion, and which is removable to open the package. Alternatively, other, e.g. slidable, opening devices are also known to be used.

The pour portion of the package is often defined by a so-called "prelaminated" hole, i.e. a hole formed in the fibrous layer of the packaging material before it is covered with the other layers, which thus close the hole to ensure airtight sealing, while at the same time being pierced or torn easily.

The opening devices described are normally heat sealed or glued directly to the respective packages by on-line applicator units downstream from the packaging machine.

Known applicator units substantially comprise a first, e.g. chain or belt, conveyor for feeding the packages successively, on a horizontal conveying surface, along a first, normally straight, path; and a second, e.g. carousel, conveyor rotating about a vertical axis to feed the opening devices successively along a curved second path interfacing the first path at an opening device application station.

More specifically, prior to application, both the packages and opening devices undergo various preparatory operations along the respective conveyors. For example, when heat sealing the opening device to the package, both the opening device and the area of the package to which the opening device is to be applied are preheated locally; and, at the application station, the opening device is pressed onto the package and held on long enough to seal it to the package.

The applicator units described are normally designed to operate with a given type of package, i.e. of predetermined shape, size, and pour portion location.

Such units therefore adapt poorly to packages other than those for which they are designed, by involving major alterations, component part replacements, and hence relatively long production stoppages.

It is an object of the present invention to provide a unit for applying opening devices to packages of pourable food products, designed to eliminate the aforementioned drawback typically associated with known applicator units, and which, in particular, adapts easily to working with packages of any type and size.

According to the present invention, there is provided a unit for applying opening devices to respective sealed packages of pourable food products, as claimed in Claim 1.

A preferred, non-limiting embodiment of the present invention will be described by way of example with reference to the accompanying drawings, in which:
Figure 1 shows a plan view of a unit, in accordance with the present invention, for applying opening devices to sealed packages of pourable food products;
Figure 2 shows a larger-scale, partly sectioned side view of the Figure 1 unit with parts removed for clarity;
Figure 3 shows a plan view, with parts removed for clarity, of an underside portion of a supporting structure of the Figure 1 unit;
Figure 4 shows a larger-scale section, with parts removed for clarity, along line IV-IV in Figure 1;
Figures 5 and 6 show, in two different operating configurations, a larger-scale detail of the Figure 4 unit showing a conveyor assembly and the supporting structure portion to which the conveyor assembly is fitted;
Figure 7 shows a larger-scale section of a detail in Figure 5;
Figure 8 shows a larger-scale, partly sectioned, schematic plan view of a top portion of the Figure 1 unit supporting structure;
Figures 9, 10 and 11 are similar to Figure 8, and show different operating configurations of the unit according to the invention.

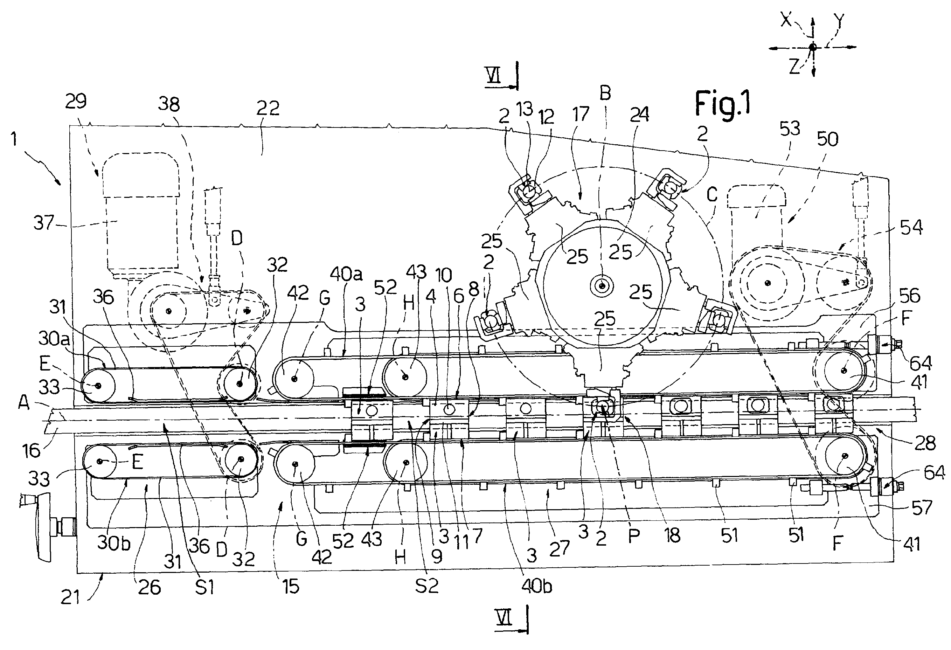

With reference to Figures 1, 2 and 4, number 1 indicates as a whole a unit for applying known, e.g. screw or hinged, closable opening devices 2 (shown only schematically in Figure 1) to known sealed packages 3 of pourable food products.

Packages 3 are produced upstream from unit 1, as described previously, from a sheet packaging material comprising a layer of fibrous material covered on both sides with layers of heat-seal plastic material, e.g. polyethylene. In the case of aseptic packages 3 for long-storage products, such as UHT milk, the packaging material also comprises a layer of oxygen-barrier material, defined, for example, by aluminium foil, which is superimposed on a layer of heat-seal plastic material, and is in turn covered with another layer of heat-seal plastic material eventually defining the inner face of packages 3 contacting the food product.

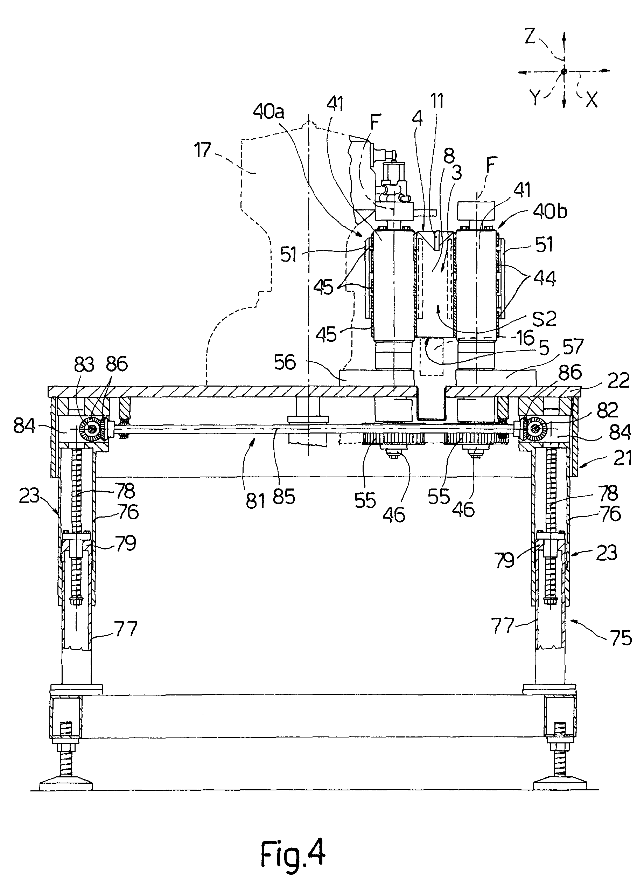

Each package 3 (Figures 1 and 4), which is parallelepiped-shaped in the example shown, is defined by a top wall 4 for receiving the relative opening device 2, by an opposite bottom wall 5, by two, respectively front and rear, walls 6, 7, and by two opposite lateral walls 8, 9.

On top wall 4, each package 3 has an opening or pour portion 10 adjacent to front wall 6, and through which the food product is poured out for consumption.

Pour portion 10 may be defined, for example, by a portion of pierceable material, to which a relative opening device 2 is eventually applied by unit 1, and which may be detached at least partly from top wall 4 using opening device 2 in known manner.

In the example shown, pour portion 10 of each package 3 is circular and defined by a so-called "prelaminated" hole, i.e. a hole formed in the fibrous layer of the packaging material before the fibrous layer is covered with the other layers, which close the hole to ensure airtight sealing, while at the same time being easily pierceable. More specifically, as shown in Figure 1, a sealing band 11, perpendicular to lateral walls 8 and 9, extends across top wall 4 of each package 3, and divides top wall 4 into two areas, one of which, adjacent to front wall 6, has pour portion 10.

Each opening device 2 (known and therefore shown only schematically in Figure 1) is substantially defined by an annular frame portion 12, which is fixed about pour portion 10 of relative package 3; and by a removable cap 13 closing frame portion 12.

Unit 1 (Figures 1, 2 and 4) substantially comprises a straight conveyor assembly 15 for feeding packages 3 successively, on a horizontal conveying surface 16, along a straight path A; and a carousel conveyor 17 rotating about an axis B perpendicular to conveying surface 16, and for feeding opening devices 2 successively along a corresponding circular path C to apply, e.g. heat seal, them to respective packages 3 at an application station 18 through which both paths A and C extend.

More specifically, conveying surface 16 is defined by a top branch of a powered belt conveyor 19 running continuously along a known fixed supporting and guide structure 20; and packages 3 are fed along path A in the Figure 1 and 4 position, in which bottom walls 5 rest on conveying surface 16, so that pour portions 10 for receiving respective opening devices 2 face upwards.

Conveyor assembly 15 and carousel conveyor 17 are fitted to a supporting structure 21 independent of structure 20 supporting conveying surface 16, so that their position with respect to conveying surface 16 can be adjusted, as described in detail later on, to adapt unit 1 to packages 3 of any type and shape.

More specifically, structure 21 is substantially defined by a horizontal supporting surface 22 parallel to and separate from conveying surface 16, and fitted on top with conveyor assembly 15 and carousel conveyor 17; and by four uprights 23 supporting supporting surface 22.

Carousel conveyor 17, which is only described as required for a clear understanding of the present invention, is located alongside conveyor assembly 15, rotates in steps about axis B, and substantially comprises a central body 24, from which project radially outwards a number of - in the example shown, five - arms 25, the free ends of which are designed to retain respective opening devices 2 in a suitable position for application to relative packages 3. More specifically, arms 25 extend over conveyor assembly 15, so as to feed relative opening devices 2 in a plane parallel to supporting surface 22 and to conveying surface 16, and located a given distance from supporting surface 22 to enable application of opening devices 2 to top walls 4 of relative packages 3.

Along path C, each opening device 2 undergoes a number of operations before being applied to relative package 3; which operations and the means by which they are performed are not described or illustrated, by not forming part of the present invention.

At application station 18, one of arms 25 of carousel conveyor 17 is positioned facing conveying surface 16, and defines a predetermined position, indicated P in Figure 1, in which to apply opening devices 2 to relative packages 3.

Conveyor assembly 15 comprises, in succession along path A, a receiving device 26 for receiving packages 3 from an upstream unit (not shown); and a transfer device 27 for feeding packages 3 from receiving device 26 in steps, and at the same rate as carousel conveyor 17, to an output station 28 of unit 1 via application station 18.

Receiving device 26, which is known and substantially provides for braking packages 3 from the upstream unit, comprises two identical belt conveyors 30a, 30b, which face each other symmetrically on opposite sides of an upstream portion of conveying surface 16, have respective belts 31 perpendicular to conveying surface 16, and cooperate respectively with front and rear walls 6 and 7 of packages 3 to feed packages 3 to transfer device 27.

In other words, belt conveyors 30a and 30b define, together and with conveying surface 16, a U-shaped passage S1 for packages 3.

As shown in Figure 1, belt conveyor 30a is located on the same side of conveying surface 16 as carousel conveyor 17.

Belt conveyors 30a, 30b are operated in known manner by a control assembly 29 (shown schematically by the dash line in Figure 1) to synchronize supply of packages 3 with operation of transfer device 27. In other words, packages 3 are received randomly by receiving device 26, and, by virtue of belt conveyors 30a, 30b, are supplied to transfer device 27 in time with operation of the transfer device.

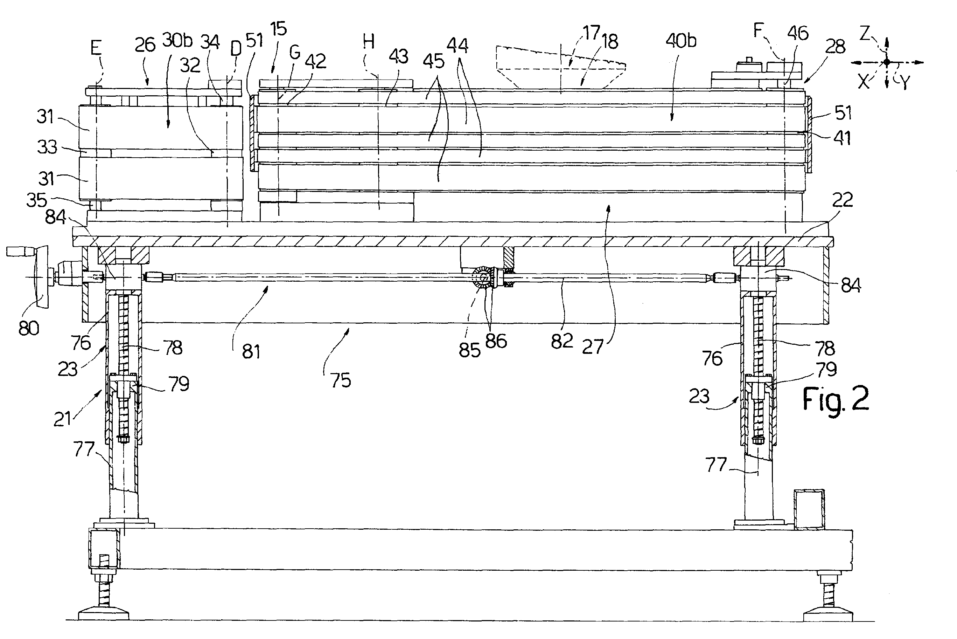

In the example shown (Figure 2), each belt conveyor 30a, 30b comprises two belts 31 looped parallel to each other about a drive pulley 32 and a driven pulley 33, which are fitted to respective shafts 34, 35 having axes D, E perpendicular to supporting surface 22, and fitted in rotary manner to supporting surface 22.

As shown in Figure 1, the active branches of belts 31 of belt conveyors 30a, 30b, i.e. the branches cooperating with respective opposite front and rear walls 6 and 7 of packages 3, are pressed against walls 6, 7 by respective fixed guide sections 36. The friction generated between belts 31 and relative front and rear walls 6, 7 of packages 3 is therefore greater than that between bottom walls 5 of packages 3 and conveying surface 16, so that travel of packages 3 inside receiving device 26 is controlled solely by belt conveyors 30a, 30b.

Control assembly 29 is conveniently located beneath supporting surface 22 and fitted in known manner, not shown, to structure 21, and comprises in known manner a drive unit 37, and a toothed drive belt 38 for transferring motion from an output shaft (not shown in Figure 1) of drive unit 37 to shafts 34 of drive pulleys 32 of belt conveyors 30a, 30b. For which purpose, shafts 34 of pulleys 32 extend through supporting surface 22, and project beneath supporting surface 22 with respective end portions (not shown) fitted with respective grooved pulleys (not shown) to which power is transferred by toothed drive belt 38.

Like receiving device 26, transfer device 27 comprises two identical belt conveyors 40a, 40b forming extensions of respective belt conveyors 30a, 30b, and cooperating respectively with front and rear walls 6, 7 of packages 3 to feed the packages to output station 28, where packages 3 are removed by an output conveyor (not shown).

Belt conveyors 40a, 40b are therefore positioned facing each other, and extend symmetrically on opposite sides of conveying surface 16; and belt conveyor 40a is interposed between conveying surface 16 and carousel conveyor 17.

Each belt conveyor 40a, 40b comprises three pulleys 41, 42, 43 rotating about respective axes F, G, H perpendicular to supporting surface 22, and substantially aligned with one another and with pulleys 32, 33 of relative conveyor 30a, 30b along the same side of conveying surface 16; first belts 44 - in the example shown, three - looped parallel to one another about two (41, 42) of the pulleys; and second belts 45 - in the example shown, two - alternating with belts 44 and looped parallel to each other about all three pulleys 41, 42, 43.

In other words, like receiving device 26, belt conveyors 40a and 40b define, together and with conveying surface 16, a U-shaped passage S2 for packages 3, having the same section as, and aligned with, passage S1

More specifically, pulleys 41, 42, 43 of each belt conveyor 40a, 40b are fitted to respective shafts 46, 47, 48 coaxial with respective axes F, G, H and fitted in rotary manner to supporting surface 22.

In the example shown, pulley 41 of each belt conveyor 40a, 40b is adjacent to output station 28 and is a drive pulley, i.e. receives motion from a control assembly 50 similar to control assembly 29 of receiving device 26 and shown only schematically in Figure 1.

Pulleys 42, 43 of each belt conveyor 40a, 40b are rotated about respective axes G, H by interaction with respective belts 44, 45. More specifically, pulleys 42 of belt conveyors 40a, 40b are located adjacent to drive pulleys 32 of relative conveyors 30a, 30b, while pulleys 43 are interposed between relative pairs of pulleys 41, 42, and more specifically between pulleys 42 and application station 18, and are located close to pulleys 42.

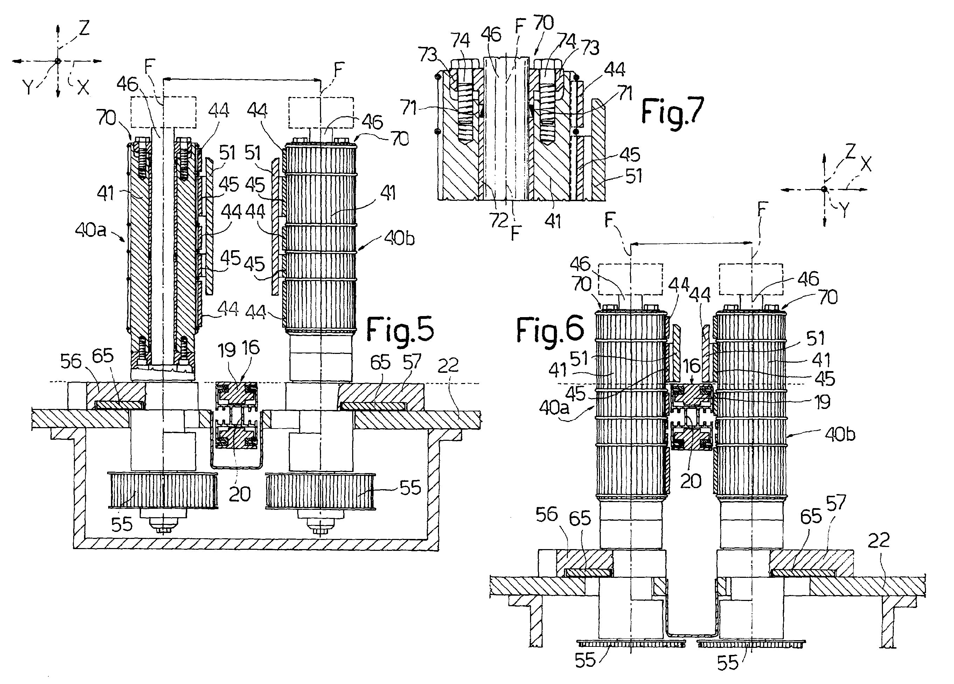

At least one of belts 45 has a number of equally spaced external push members 51, which cooperate with the upstream lateral walls 8 of packages 3 to push packages 3 along path A to output station 28. As shown in Figures 5 and 6, which illustrate two different operating configurations of unit 1 described in detail later on, push members 51 - defined by vertical bars in the example shown - may extend from one (Figure 6) or both (Figure 5) of belts 45, depending on the height of packages 3, i.e. the distance between top and bottom walls 4 and 5.

Belts 44 of conveyors 40a, 40b substantially provide for exerting pressure on respective front and rear walls 6 and 7 of packages 3 to generate greater friction on walls 6, 7 than that between bottom walls 5 and conveying surface 16, so that, between pulleys 43 and 41, travel of packages 3 is controlled solely by belt conveyors 40a, 40b.

In the Figure 6 configuration of unit 1, such pressure on packages 3 is exerted solely by the top belt 44.

Upstream from the point at which packages 3 are fed between belts 44, transfer device 27 comprises stop means 52 fitted in a fixed position to supporting surface 22, and which cooperate with and temporarily arrest each package 3 pending the arrival of the adjacent upstream push members 51, by which the package is then fed along path A.

In the example shown, stop means 52 are defined by two sets of brushes, which extend on opposite sides of conveying surface 16, immediately upstream from pulleys 43, project inside passage S2 with respect to belts 45, and cooperate respectively with front and rear walls 6 and 7 of each package 3 entering transfer device 27.

In connection with the above, it should be pointed out that:
- receiving device 26 provides for releasing each package 3 within a given time interval enabling package 3, conveyed on conveying surface 16, to be inserted inside passage S2 between two successive pairs of push members 51 on belt conveyors 40a, 40b, i.e. in such a condition that package 3 can then be fed forward by push members 51;
- stop means 52 ensure each package 3 is contacted by a relative pair of push members 51 on belt conveyors 40a, 40b, and so establish a predetermined position of packages 3 and relative pour portions 10 with respect to application position P of opening devices 2 at application station 18.

With reference to Figures 1, 4, 5 and 6, like control assembly 29 of receiving device 26, control assembly 50 is conveniently located beneath supporting surface 22 and fitted in known manner, not shown, to structure 21, and comprises in known manner a drive unit 53, and a toothed drive belt 54 for transferring motion from an output shaft (not shown) of drive unit 53 to shafts 46 of drive pulleys 41. For which purpose, shafts 46 extend through supporting surface 22 (Figures 4, 5 and 6), and project beneath supporting surface 22 with respective end portions fitted with respective grooved pulleys 55 to which power is transferred by toothed drive belt 54.

As shown in Figures 5, 6, 8-11, shafts 34, 35, 46, 47, 48 of belt conveyors 30a, 40a, and shafts 34, 35, 46, 47, 48 of belt conveyors 30b, 40b are fitted respectively, in axially fixed and rotary manner, to a first and second bed 56, 57, in turn fixed to supporting surface 22 on opposite sides of conveying surface 16.

An important characteristic of the present invention lies in unit 1 also comprising a first and second horizontal adjustment assembly 60, 61 for adjusting the position of respective beds 56, 57 along supporting surface 22 and in a direction X perpendicular to path A, so that, for any type of package 3, pour portions 10 of packages 3 and application position P of opening devices 2 at application station 18 are aligned in a direction Y defined by path A.

Each bed 56, 57 is defined by a substantially rectangular plate elongated in the feed direction of packages 3 and secured to supporting surface 22 so as to be movable in direction X.

More specifically, each bed 56, 57 comprises two slots 62, which are elongated in a direction parallel to direction X, are formed close to where respective shaft 48 extends, and are engaged, while being allowed to slide in direction X, by respective pins 63 projecting perpendicularly from supporting surface 22.

Each adjustment assembly 60, 61 comprises an actuating device 64 - in the example shown, a screw-nut screw type - fitted to relative bed 56, 57, and by which bed 56, 57 can be moved in direction X towards or away from conveying surface 16.

In the example shown, each actuating device 64 acts on a plate 65 interposed between relative bed 56, 57 and supporting surface 22, and which is secured to bed 56, 57 to slide in direction Y, and to supporting surface 22 so as to move in an oblique direction T coplanar with directions X and Y.

More specifically, each plate 65 engages in sliding manner an opening 66 formed in relative bed 56, 57 and elongated in direction Y, and has two oblique slots 67 elongated in a direction parallel to direction T and engaged by respective pins 63 on supporting surface 22.

Each actuating device 64 comprises a screw 68 fitted in axially fixed, rotary manner to relative bed 56, 57 with its axis parallel to direction Y; and a nut screw 69 integral with relative plate 65 and engaged by screw 68.

When screw 68 of each adjustment assembly 60, 61 is rotated, relative plate 65 moves along supporting surface 22 in a direction parallel to direction T, and moves in direction Y with respect to relative bed 56, 57, thus moving bed 56, 57 in direction X.

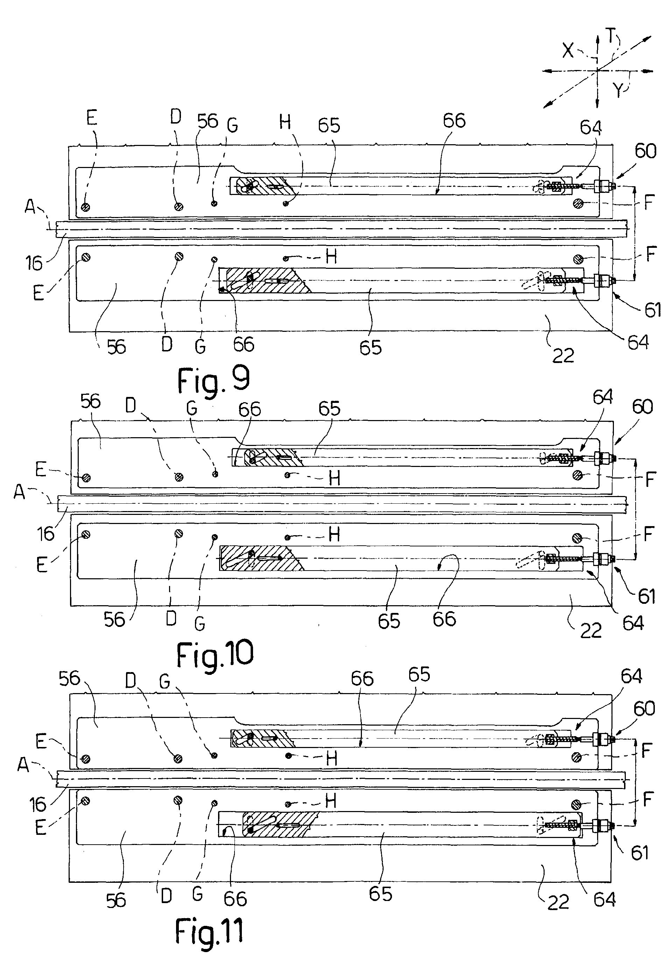

Figures 9-11 show various positions which can be assumed by beds 56, 57 in direction X with respect to conveying surface 16. In other words, for any type of package 3, pour portions 10 can be aligned in direction Y with application position P of opening devices 2, and the distance between the active branches of pairs of facing conveyors 30a, 30b and 40a, 40b can be adjusted to adapt receiving device 26 and transfer device 27 to packages 3 of different widths, i.e. different distances between front and rear walls 6 and 7.

Each plate 65 also has a slot 58 elongated in direction Y and engaged, while being allowed to slide in direction Y, by a respective pin 59 projecting from supporting surface 22 and parallel to pins 63. Engagement of the ends of slot 58 in each plate 65 by relative pin 59 defines the limit positions of plate 65 with respect to relative bed 56, 57 in direction Y, and therefore the extent to which bed 56, 57 can be adjusted in direction X with respect to conveying surface 16.

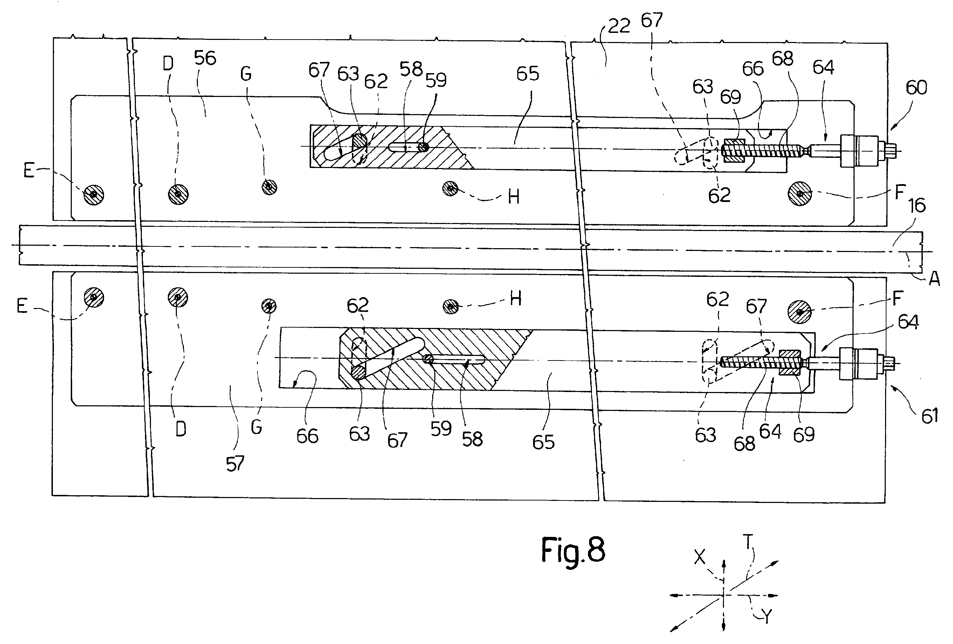

Another important characteristic of the present invention lies in each drive pulley 41 being fixed to relative shaft 46 by releasable connecting means 70 (Figures 5 and 7), so that, in the released condition, belts 45 of each conveyor 40a, 40b can slide freely on relative pulleys 41, 42, 43 to adjust the position of relative push members 51 in direction Y and align pour portions 10 of packages 3 with application position P of opening devices 2 in direction X at application station 18.

In other words, by adjusting the positions of beds 56, 57 in direction X and the positions of push members 51 in direction Y, pour portion 10 of each package 3 can be aligned, at application station 18, with application position P of opening devices 2 in a direction Z perpendicular to directions X and Y.

As shown particularly in Figures 5 and 7, connecting means 70 comprise a number of pairs of complementary wedge members 71 interposed radially between relative shaft 46 and relative pulley 41, and locked axially to each other to radially tighten shaft 46 and pulley 41.

More specifically, the pairs of wedge members 71 alternate axially with respective cylindrical members 72 fitted to relative shaft 46, and are locked axially with cylindrical members 72 between respective end flanges 73 fixed by screws 74 to the opposite axial ends of relative pulley 41.

More specifically, wedge members 71 in each pair are substantially C-shaped, and are defined by respective cylindrical surfaces fitted respectively to relative pulley 41 and relative shaft 46, and by respective conical surfaces cooperating in sliding manner with each other.

Another important characteristic of the present invention lies in uprights 23 of structure 21 being telescopic, and in unit 1 also comprising a vertical adjustment assembly 75 fitted to structure 21 and for selectively adjusting the height of uprights 23, and therefore the position of supporting surface 22 and the operating components fitted to it (conveyor assembly 15 and carousel conveyor 17), with respect to conveying surface 16 in a direction Z perpendicular to directions X and Y. The application height of opening devices 2 with respect to conveying surface 16 can therefore be adjusted to enable unit 1 to operate with packages 3 of any height, i.e. any distance between top and bottom walls 4 and 5.

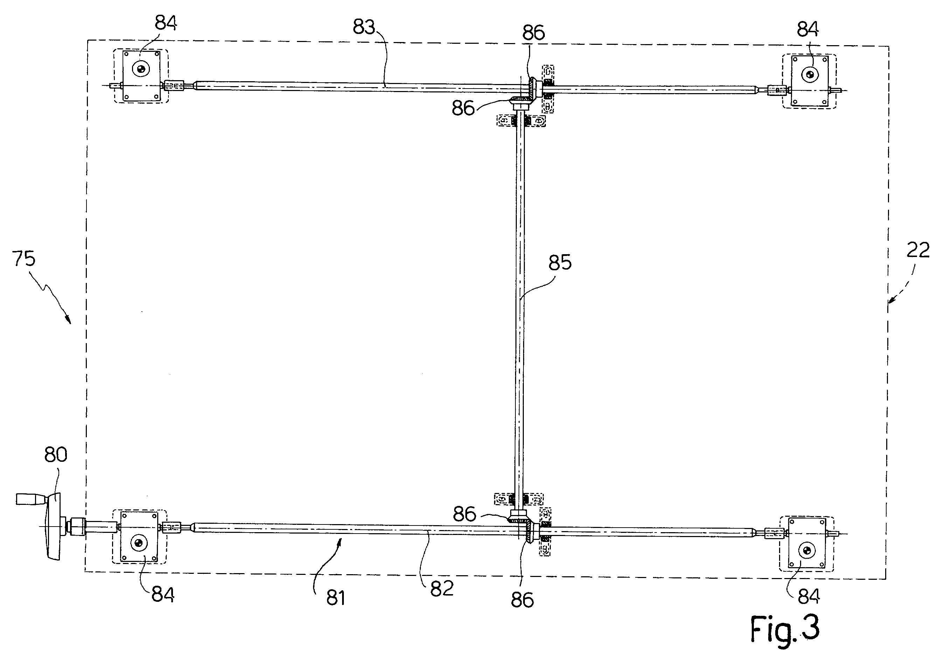

With particular reference to Figures 2, 3 and 4, each upright 23 is defined by two tubular members 76, 77 nested one inside the other in sliding manner, and the top one (76) of which houses a rotary screw 78 in a fixed vertical position, while the other (77) is fitted with a nut screw 79 engaged by screw 78.

Adjustment assembly 75 comprises a control member 80 - in the example shown, a crank; and a transmission device 81 for transferring the rotation produced by control member 80 to screws 78 housed in tubular members 76 of uprights 23.

More specifically, transmission device 81 comprises two shafts 82, 83 extending parallel to direction Y along and beneath opposite sides of supporting surface 22, and the opposite ends of each of which activate a relative pair of screws 78 of respective uprights 23. More specifically, rotation is transferred by shafts 82, 83 to respective screws 78 via respective known transmissions 84 not shown in detail, and which are engaged by the respective ends of shafts 82, 83.

One end of one of the shafts (82) is fitted integrally with control member 80, while the other shaft (83) is powered by shaft 82 via an intermediate shaft 85 perpendicular to and coplanar with shafts 82, 83 and connected to each of them by respective bevel gears 86.

Operation of unit 1, which in part is obvious from the foregoing description, will be described with reference to one package 3 fed to conveyor assembly 15, and to one opening device 2 fed by carousel conveyor 17 to application station 18 and subjected, along path C, to a number of preparatory operations - not described or shown, by not forming part of the present invention - to prepare opening device 2 for application to package 3.

Package 3 reaches receiving device 26 with its bottom wall 5 resting on conveying surface 16, and with pour portion 10 facing upwards. Inside receiving device 26, front and rear walls 6, 7 of package 3 are pressed between the facing branches of belts 31 of conveyors 30a, 30b, which thus feed the package forward. In fact, though conveying surface 16 also moves continuously along path A, the friction between each belt 31 and relative wall 6, 7 of package 3 is greater than that between bottom wall 5 of package 3 and conveying surface 16, so that conveying surface 16 has no effect on the travel of package 3 inside receiving device 26.

As stated, belt conveyors 30a, 30b are so operated in known manner as to insert package 3 inside transfer device 27 between two successive pairs of push members 51 on belt conveyors 40a, 40b.

Package 3 is fed between receiving device 26 and transfer device 27 by conveying surface 16, which continues conveying package 3 even inside passage S2 up to stop means 52.

At this point, package 3 is arrested between stop means 52 pending the arrival of the first upstream pair of push members 51, the conveying force of which is greater than the retaining force of stop means 52, so that package 3 is fed between belts 44 and 45.

In this way, a definite position of package 3, and above all of pour portion 10, with respect to application position P of opening device 2 at application station 18 is assured.

The pressure exerted by belts 44 on front and rear walls 6 and 7 of package 3 produces greater friction on walls 6, 7 than that between bottom wall 5 and conveying surface 16, so that travel of package 3 between pulleys 43 and 41 is controlled solely by conveyors 40a, 40b.

When package 3 reaches application station 18, a known actuator assembly (not shown) on carousel conveyor 17 is operated to press and fix opening device 2 onto pour portion 10 of package 3.

As stated, unit 1 can operate with packages 3 of any type or configuration, by simply making a few straightforward adjustments in direction X, Y and Z.

More specifically (Figures 2-6), by rotating control member 80, the height of uprights 23 can be adjusted to move both conveyor assembly 15 and carousel conveyor 17 in direction Z, and so adjust the application height of opening devices 2 with respect to conveying surface 16, to adapt it to the height of packages 3 to which opening devices 2 are to be applied. Figures 5 and 6 show two different configurations of unit 1, which clearly show how the position of conveying surface 16 remains unchanged.

More specifically, rotation of control member 80 rotates both shaft 82 integral with it, and shaft 83 connected to shaft 82 by intermediate shaft 85 and bevel gears 86. Rotation of shafts 82 and 83 is then transferred to screws 78 of each upright via transmissions 84.

Rotation of each screw 78 moves relative nut screw 79, so that relative tubular members 76 and 77 of each upright 23 slide with respect to each other in direction Z, thus adjusting the position of supporting surface 22, and with it the position of conveyor assembly 15 and carousel conveyor 17, with respect to conveying surface 16 in direction Z.

The adjustments in directions X and Y provide for aligning, in direction X, pour portion 10 of each package 3 and application position P of opening devices 2 at application station 18.

The adjustment in direction X is made by simply operating one or both of actuating devices 64 (Figures 8-11). More specifically, by rotating screw 68 of each actuating device, relative plate 65 moves along supporting surface 22 in a direction parallel to direction T, and moves in direction Y with respect to relative bed 56, 57, thus moving bed 56, 57 in direction X.

To make the adjustment in direction Y, screws 74 of pulleys 41 are unscrewed to release pulleys 41 from relative shafts 46, and belts 45 are then simply slid in direction Y until a pair of push members 51 comes to rest against a template (not shown) representing package 3 and set to a definite position with respect to carousel conveyor 17 and, hence, application position P of opening devices 2.

As will be clear from the foregoing description, the adjusting system according to the invention provides for easily adapting unit 1 to packages 3 of different types and sizes, and to different locations of pour portion 10 on packages 3. That is, the position of conveying surface 16 on which packages 3 rest remains unchanged, and the positions of all the other component parts of unit 1 are adjusted with respect to conveying surface 16 to align pour portion 10 of each package 3 with application position P of opening devices 2 in directions X, Y and Z.

Clearly, changes may be made to unit 1 as described herein without, however, departing from the scope of the accompanying Claims.

## Claims

1. A unit (1) for applying opening devices (2) to pour portions (10) of respective sealed packages (3) of pourable food products, said unit (1) comprising:
first conveying means (15) for feeding said packages (3) successively on a conveying surface (16) along a straight first path (A);
second conveying means (17) for feeding said opening devices (2) successively along a curved second path (C) into a predetermined application position (P), with respect to said conveying surface (16), interfacing said first path (A);
first adjusting means (75) for adjusting the position of said first and second conveying means (15, 17) in a first direction (Z) perpendicular to said conveying surface (16), so as to adjust the distance, in said first direction (Z), between said application position (P) and the conveying surface (16); and
second adjusting means (60, 61, 70) for adjusting the position of said first conveying means (15) along a surface parallel to said conveying surface (16), so as to align said pour portion (10) of each said package (3) with said application position (P) in a second and a third direction (Y, X) perpendicular to each other and to said first direction (Z); said second direction (Y) being defined by the feed direction of said packages (3) along said first path (A) .

2. A unit as claimed in Claim 1, **characterized in that** said first and second conveying means (15, 17) are fitted to a supporting structure (21) independent of said conveying surface (16).

3. A unit as claimed in Claim 2, **characterized in that** said supporting structure (21) comprises a horizontal supporting surface (22) parallel to and distinct from said conveying surface (16), and supporting said first and second conveying means (15, 17); and a number of telescopic uprights (23) supporting said supporting surface (22).

4. A unit as claimed in Claim 3, **characterized in that** said first adjusting means (75) comprise first actuating means (78, 79, 80, 81) activated selectively to adjust the extension of said uprights (23) in said first direction (Z) .

5. A unit as claimed in Claim 4, **characterized in that** each said upright (23) comprises at least two members (76, 77) connected to each other in sliding manner; and **in that** said first actuating means comprise, for each said upright (23), a screw (78) and a nut screw (79) connected to each other and integral with respective said members (76, 77).

6. A unit as claimed in any one of the foregoing Claims, **characterized in that** said first conveying means comprise at least two conveyors (30a, 30b, 40a, 40b), which extend along respective opposite sides of said conveying surface (16), cooperate with opposite walls (6, 7) of said packages (3), and define, with said conveying surface (16), a passage (S1, S2) for conveying said packages (3); said second adjusting means comprising means (60, 61) for adjusting the position of each said conveyor (30a, 30b, 40a, 40b) in said third direction (X).

7. A unit as claimed in Claim 6, **characterized in that** said means (60, 61) for adjusting the position of each said conveyor (30a, 30b, 40a, 40b) comprise:
two beds (56, 57) supporting respective said conveyors (30a, 40a; 30b, 40b) and fitted to said supporting structure (21) on opposite sides of said conveying surface (16);
connecting means (62, 63) interposed between each said bed (56, 57) and said supporting structure (21) to permit independent movement of said beds (56, 57), with respect to the supporting structure (21), in said third direction (X); and
second actuating means (64) activated selectively to move each said bed (56, 57) in said third direction (X).

8. A unit as claimed in Claim 7, **characterized in that** said connecting means comprise at least one slot (62) formed in each said bed (56, 57) and engaged, while being allowed to slide in said third direction (X), by a relative engaging member (63) integral with said supporting structure (21).

9. A unit as claimed in Claim 8, **characterized in that** said means for adjusting the position of each said conveyor (30a, 30b, 40a, 40b) comprise, between each said bed (56, 57) and said supporting structure (21), a slide (65) fitted to the bed (56, 57) so as to slide in said second direction (Y), and to said supporting structure (21) so as to move in an oblique fourth direction (T) coplanar with said second and said third direction (X, Y); said second actuating means comprising, for each said bed (56, 57), an actuator (64) acting on and for moving said slide (65) in said second direction (Y).

10. A unit as claimed in any one of Claims 7 to 9, **characterized in that** each said conveyor (40a, 40b) comprises at least two, respectively drive and driven, pulleys (41; 42, 43) fitted to the relative said bed (56, 57) to rotate about respective axes (F, G, H) parallel to said first direction (Z); at least one belt (45) looped about said pulleys (41; 42, 43) and having a number of equally spaced push members (51) acting on and for feeding respective said packages (3) along said first path (A); and drive means (53) for operating a shaft (46) of said drive pulley (41) in steps; said second adjusting means also comprising releasable angular connecting means (70) located between said drive pulley (41) and the relative said shaft (46) to allow, in the release condition, said belt (45) and said push members (51) to move freely along said first path (A) to position said pour portions (10) of said packages (3) as required with respect to said application position (P) of said opening devices (2).

11. A unit as claimed in Claim 10, **characterized in that** said releasable angular connecting means (70) comprise at least one pair of complementary wedge members (71) interposed radially between said drive pulley (41) and the relative said shaft (46), and which are locked axially to radially tighten said drive pulley (41) and the shaft (46).
